# EUROPÄISCHE PATENTSCHRIFT

(11) **EP 2 635 359 B1**
(45) Veröffentlichungstag und Bekanntmachung des Hinweises auf die Patenterteilung: **25.07.2018**
(21) Anmeldenummer: 11776756.6
(22) Anmeldetag: 27.10.2011
(51) Int. Cl.: B01D 36/00, B01D 35/18, F02M 37/22

(54) **KRAFTSTOFFFILTER FÜR EINE BRENNKRAFTMASCHINE**
FUEL FILTER FOR AN INTERNAL COMBUSTION ENGINE
FILTRE À CARBURANT POUR UN MOTEUR À COMBUSTION INTERNE

(30) Priorität: 02.11.2010 DE 102010043218
(43) Veröffentlichungstag der Anmeldung: 11.09.2013
(73) Patentinhaber: Mahle International GmbH, 70376 Stuttgart (DE)
(72) Erfinder: HOFFMANN, Dierk, 71229 Leonberg (DE)
(74) Vertreter: BRP Renaud & Partner mbB Rechtsanwälte Patentanwälte Steuerberater
(86) Internationale Anmeldenummer: PCT/EP2011/068815
(87) Internationale Veröffentlichungsnummer: WO 2012/059389

(56) Entgegenhaltungen:
- EP-A2- 1 233 173
- FR-A1- 2 601 600
- US-A1- 2002 157 999
- US-A1- 2009 078 626
- US-B1- 6 248 236

## Beschreibung

Die vorliegende Erfindung betrifft einen Kraftstofffilter für eine Brennkraftmaschine, insbesondere eines Kraftfahrzeugs.

Aus der DE 10 2005 015 194 A1 ist ein Kraftstofffilter bekannt, der in einem Aufnahmebehälter einen ersten Wassersammelraum sowie einen Einsatz enthält, wobei der Einsatz ein Filterelement mit ringförmigem Filterkörper sowie ein Topfelement umfasst, das an eine Endscheibe des Filterelements angeschlossen ist und einen zweiten Wassersammelraum enthält. Dem Filterelement sind zwei zylindrische, als Koalescer arbeitende Wasser abscheidende, für Kraftstoff durchlässige Schichten vorgeschaltet, wobei die außen liegende Schicht das abgeschiedene Wasser zum ersten Wassersammelraum führt, während die innen liegende Schicht das abgeschiedene Wasser zum zweiten Wassersammelraum führt. Beim bekannten Kraftstofffilter besitzen sowohl der Aufnahmebehälter als auch das Topfelement jeweils eine zentrale Ablassöffnung, die beide mit einem gemeinsamen Verschlusselement verschlossen sind und die mit dem jeweiligen Wassersammelraum fluidisch verbunden sind.

In Wartungsintervallen wird bei einem derartigen Kraftstofffilter das Filterelement ausgetauscht. Im Aufnahmebehälter, der den ersten Wassersammelraum enthält, sammeln sich neben dem ausgeschiedenen Wasser auch andere Verunreinigungen, bspw. Korrosionspartikel. Insbesondere kann es an der Innenseite des Aufnahmebehälters durch das im ersten Wassersammelraum stehende Wasser zu Korrosionsbildung kommen, da der Aufnahmebehälter aufgrund der zu beherrschenden Drücke regelmäßig aus Metall hergestellt ist. Um eine vorzeitige Verunreinigung der Wasser abscheidenden Schichten sowie des Filterkörpers zu vermeiden, ist es beim bekannten Kraftstofffilter daher erforderlich, den Aufnahmebehälter zu reinigen. Dies ist mit einem vergleichsweise hohen Aufwand verbunden.

Ein weiterer gattungsgemäßer Kraftstofffilter ist aus der EP 1 233 173 bekannt.

Die vorliegende Erfindung beschäftigt sich mit dem Problem, für einen Kraftstofffilter der Eingangs genannten Art eine verbesserte Ausführungsform anzugeben, die sich insbesondere durch eine vereinfachte Wartung auszeichnet.

Erfindungsgemäß wird dieses Problem durch die Gegenstände des unabhängigen Anspruchs 1 gelöst. Vorteilhafte Ausführungsformen sind Gegenstand der abhängigen Ansprüche.

Die Erfindung beruht auf dem allgemeinen Gedanken, im Inneren des Filterkörpers einen Koalescer anzuordnen und ein Topfelement mit Wassersammelraum so mit dem Filterelement zu koppeln, dass der Wassersammelraum zum Inneren des Filterkörpers offen ist. Die Wasserabscheidung erfolgt somit im Inneren des Filterkörpers, sodass auch eine Schmutzansammlung im Wassersammelraum ausschließlich im Inneren des Topfelements erfolgt. Das Topfelement ist jedoch im Rahmen der Wartung aus dem Aufnahmebehälter entfernbar bzw. austauschbar, wodurch die Gefahr einer Verunreinigung des Aufnahmebehälters selbst deutlich reduziert ist. Insbesondere kann eine Reinigung des Aufnahmebehälters entfallen.

Besonders vorteilhaft ist dabei eine Ausführungsform, bei welcher der Kraftstofffilter so konzipiert ist, dass sein Filterelement von radial außen nach radial innen durchströmt ist, sodass sich der Koalescer auf der Reinseite des Filterelements befindet. Die Wasserabscheidung erfolgt somit, insbesondere ausschließlich, reinseitig. Ebenso befindest sich der, insbesondere einzige, Wassersammelraum in diesem Fall auf der Reinseite des Filterelements bzw. des Kraftstofffilters.

Zweckmäßig sind Filterelement und Topfelement separat hergestellte Bauteile, die auf geeignete Weise aneinander befestigt sind, um einen einheitlich in den Aufnahmebehälter einsetzbaren Einsatz zu bilden. Hierdurch vereinfacht sich der gleichzeitige Austausch von Filterelement und Topfelement im Wartungsfall. Insbesondere vereinfacht sich die Handhabung des Topfelements.

Bspw. können Filterelement und Topfelement lösbar aneinander befestigt sein, wobei insbesondere eine Clipsverbindung bevorzugt ist. Eine derartige Clipsverbindung ermöglicht eine besonders einfache Montage. Alternativ zu einer lösbaren Befestigung kann auch eine unlösbare Befestigung vorgesehen sein, bspw. eine Schweißverbindung.

Um das Filterelement und das Topfelement einfach aneinander befestigen zu können, ist am Filterelement zweckmäßig eine geeignete mechanische Schnittstelle ausgebildet, während das Topfelement eine dazu komplementäre Schnittstelle aufweist. Als "Schnittstelle" wird im vorliegenden Zusammenhang lediglich eine Adaption oder Vorbereitung des Filterelements und des Topfelements verstanden, welche das Fügen bzw. das Befestigen der beiden separaten Bauteile aneinander vereinfacht. Bspw. umfasst besagte Schnittstelle komplementär ausgestaltete Abschnitte an Filterelement und Topfelement, über welche die Befestigung erfolgt. Insbesondere umfasst die jeweilige Schnittstelle Clipselemente zur Realisierung einer Clipsverbindung oder Schmelzkonturen zur Realisierung einer Schweißverbindung, z. B. Reibschweißverbindung.

Entsprechend einer vorteilhaften Ausführungsform kann das Topfelement zur Übertragung von Druckkräften am Filterelement axial abgestützt sein. Insbesondere kann diese axiale Abstützung über Stege erfolgen, über welche auch die Clipsverbindung zwischen Filterelement und Topfelement erfolgt. Eine derartige druckstabile axiale Abstützung kann bspw. dafür genutzt werden, mit Hilfe eines geeigneten Werkzeugs im Bereich der Ablassöffnung eine axiale Druckkraft in das Topfelement einzuleiten, um so die gesamte Einheit aus Filterelement und Topfelement aus dem Aufnahmebehälter axial auszutreiben.

Bei einer anderen Ausführungsform kann das Topfelement an seiner Außenseite zumindest eine integral ausgeformte, geschlossen umlaufende Dichtkontur aufweisen. Im montierten Zustand, also wenn der Einsatz oder zumindest das Topfelement im Filtergehäuse, insbesondere im Aufnahmebehälter des Filtergehäuses, angeordnet ist, kommt die jeweilige Dichtkontur an einer Innenseite des Filtergehäuses radial zur Anlage. Hierdurch kann ein Eindringen von Kraftstoff zwischen Topfelement und Filtergehäuse vermieden bzw. reduziert werden.

Bei einer anderen Ausführungsform kann zusätzlich oder alternativ zur genannten Dichtkontur das Topfelement an seiner Außenseite mehrere in Umfangsrichtung verteilt angeordnete, nach außen abstehende, integral ausgeformte Vorsprünge aufweisen. Im montierten Zustand können diese Vorsprünge an der Innenseite des Filtergehäuses radial anliegen, wodurch Relativbewegungen zwischen Filtergehäuse und Topfelement bzw. zwischen Filtergehäuse und Einsatz reduziert bzw. gedämpft werden können. Erfindungsgemäß weist das Topfelement koaxial zur Ablassöffnung einen Ringkragen auf, an dem radial innen eine geschlossen umlaufende Dichtkontur integral ausgeformt ist. Diese Dichtkontur kommt im montierten Zustand an einer Innenseite des Filtergehäuses radial zur Anlage. Auf diese Weise wird im Bereich der Ablassöffnung eine effektive Dichtung zwischen Topfelement und Filtergehäuse bzw. Aufnahmebehälter realisiert. Der Ringkragen sorgt dabei für eine radiale Vorspannung, sodass die jeweilige Dichtkontur radial vorgespannt am Filtergehäuse zur Anlage kommt. Zweckmäßig befindet sich die Dichtkontur im Bereich eines freien Endes des Ringkragens.

Bei einer weiteren Ausführungsform kann das Filterelement eine Innenzarge aufweisen, an der sich der Filterkörper radial innen abstützt. Zweckmäßig ist der Kraftstofffilter so konzipiert, dass das darin eingesetzte Filterelement von radial außen nach radial innen durchströmt wird. Der Filterkörper kann sich dann sicher an der Innenzarge abstützen.

Besonders vorteilhaft ist dabei eine Ausführungsform, bei welcher radial zwischen dem Kolaescer und der Innenzarge ein Ringraum vorhanden ist, wodurch für das am Koalescer abgeschiedene Wasser ausreichend Raum zur Verfügung gestellt wird, der ein Abfließen des Wassers entlang des Kolaescers ermöglicht, ohne dass die Kraftstoffströmung das abgeschiedene Wasser zurückbehält bzw. in eine vom Wassersammelraum wegführende Richtung antreibt. Besonders zweckmäßig kann die Innenzarge integral an einer Endscheibe des Filterelements ausgeformt sein. Hierdurch wird die Montage des Filterelements vereinfacht.

Bei einer anderen Ausführungsform kann der Koalescer einen zylindrischen Mantel aus einer für Kraftstoff durchlässigen Struktur aufweisen, bei der es sich bspw. um eine Siebstruktur oder um eine Filterstruktur handeln kann. Vorzugsweise ist der Mantel des Koalescers mit einem ersten axialen Ende an einer ersten Endscheibe des Filterelements befestigt. Die jeweilige Endscheibe dichtet den Filterkörper axial. Durch die Anordnung des Koalescers an der ersten Endscheibe vereinfacht sich die Montage des Filterelements. Bspw. kann der Mantel in den Kunststoff der ersten Endscheibe einplastifiziert sein. Ebenso ist eine Schweißverbindung denkbar, falls die Mantelstruktur aus einem entsprechenden, aufschmelzbaren Kunststoff besteht. Sofern die Mantelstruktur metallisch ist, kann die erste Endscheibe auch an den Mantel angespritzt sein.

Gemäß einer weiteren Ausführungsform kann der Koalescer einen Boden aufweisen, der den Mantel an einem zweiten axialen Ende verschließt. Der Boden selbst kann für Flüssigkeiten undurchlässig ausgestaltet sein, sodass die Wasser abscheidende Wirkung ausschließlich durch die Mantelstruktur realisiert wird. Alternativ ist grundsätzlich denkbar, auch den Boden mit einer für Kraftstoff durchlässigen Struktur auszugestalten.

Zusätzlich oder alternativ kann der Koalescer eine Innenzarge aufweisen, an der sich der Mantel radial innen abstützt. Da auch der Koalescer vorzugsweise radial von außen nach innen durchströmt ist, führt die Innenzarge des Koalescers zu einer Stabilisierung der Mantelstruktur.

Besonders zweckmäßig ist dabei eine Ausführungsform, bei welcher die Innenzarge des Koalescers durch mehrere Streben gebildet ist, die den Boden des Koalescers mit der ersten Endscheibe des Filterelements verbinden. Insbesondere kann die Innenzarge bzw. können die Streben integral mit der ersten Endscheibe des Filterelements hergestellt sein, bspw. mittels Spritzguss, vorzugsweise aus Kunststoff. Die Mantelstruktur kann dabei vom Kunststoff der ersten Endscheibe bzw. der Innenzarge zumindest teilweise umspritzt sein, um die Mantelstruktur an der Innenzarge bzw. an den Streben sowie an der ersten Endscheibe zu fixieren.

Entsprechend einer anderen vorteilhaften Ausführungsform kann das Filterelement eine (erste) Endscheibe aufweisen, die zentral offen ist und einen axial abstehenden Ringkragen aufweist. Dieser Ringkragen kann radial außen eine integral ausgeformte, geschlossen umlaufende Dichtkontur besitzen. Im eingebauten Zustand kann diese Dichtkontur an einer Innenseite eines Stutzens eines Filtergehäuses des Kraftstofffilters radial zur Anlage kommen. Im eingebauten Zustand ist dabei der Ringkragen der ersten Endscheibe in besagten Stutzen des Filtergehäuses axial eingesteckt. Hierdurch kann die Rohseite gegenüber der Reinseite abgedichtet werden. Entsprechend einer besonders vorteilhaften Ausführungsform kann der Ringkragen radial innen eine umlaufende Ringnut aufweisen, in welcher ein Federring angeordnet ist, der den Ringkragen im Bereich der Dichtkontur radial nach außen vorspannt. Durch diese Bauweise kann die Dichtkontur im montierten Zustand unter erhöhter radialer Vorspannung am Stutzen zur Anlage kommen, was die Effektivität der hier erzielbaren Dichtung erheblich verbessert.

Das Filtergehäuse umfasst einen Aufnahmebehälter zur Aufnahme des Einsatzes sowie einen Deckel zum Verschließen des Aufnahmebehälters. Der Aufnahmebehälter weist an einem Behälterboden komplementär zur Ablassöffnung des Topfelements eine Durchtrittsöffnung auf, durch die hindurch der Verschluss zum Verschließen der Ablassöffnung anbringbar ist. Somit kann durch Entfernen des Verschlusses vor dem Öffnen des Deckels der Wasseraufnahmeraum entleert werden.

Besonders zweckmäßig ist es, den Topfeinsatz hinsichtlich seiner Außenkontur weitgehend komplementär zu einer Innenkontur des Aufnahmebehälters zu formen, dass das Topfelement den Aufnahmebehälter zumindest in einem dem Topfelement zugeordneten Abschnitt weitgehend vollständig ausfüllt. Die Gefahr einer Verschmutzung des Aufnahmebehälters kann dadurch erheblich reduziert werden.

Bei einer anderen Ausführungsform kann der Deckel des Filtergehäuses einen Innendeckel und einen Außendeckel aufweisen, wobei der Innendeckel gegenüber dem Aufnahmebehälter abgedichtet ist, während der Außendeckel am Aufnahmebehälter befestigt ist. Mit anderen Worten, die Abstützung der im Inneren des Filtergehäuses herrschenden Drücke erfolgt ausschließlich zwischen Aufnahmebehälter und Außendeckel, während die Abdichtung des Innenraums des Filtergehäuses gegenüber der Umgebung ausschließlich zwischen Aufnahmebehälter und Innendeckel erfolgt. Hierdurch ist es insbesondere möglich, den Innendeckel mit komplexen Konturen aus Kunststoff herzustellen, während der Außendeckel als einfach geformtes Blechformteil konzipiert werden kann.

Insbesondere kann somit der Innendeckel mittels des Außendeckels am Aufnahmebehälter befestigt werden. Eine separate Befestigung des Innendeckels am Außenbehälter kann dadurch entfallen.

Ferner kann der Innendeckel einen Auslassstutzen für reinseitigen Kraftstoff aufweisen, der durch eine im Außendeckel ausgebildete Durchgangsöffnung nach außen hindurch geführt ist. Zusätzlich oder alternativ kann der Deckel eine Heizung und/oder ein Druckregelventil enthalten bzw. aufweisen. Insbesondere kann die Heizung bzw. das Druckregelventil am Innendeckel angeordnet sein, insbesondere an einer dem Filterelement zugewandten Innenseite.

Der Verschluss zum Verschließen der Ablauföffnung des Topfelements kann entsprechend einer vorteilhaften Ausführungsform an einer dem Topfelement zugewandten Oberseite eine Auffangschale aufweisen. In dieser Auffangschale kann sich beim Lösen des Verschlusses Flüssigkeit, insbesondere Wasser oder ein Wasser-Kraftstoff-Gemisch oder nur Kraftstoff, sammeln, das durch die Ablassöffnung austritt, sobald der Verschluss einen Durchlasspfad freigibt. Dabei drosselt der Verschluss die Ablassöffnung, sodass nur ein reduzierter Flüssigkeitsstrom in die Auffangsschale einströmt. Besonders zweckmäßig kann der Verschluss mit einer Ablauföffnung ausgestattet sein, die mit der Auffangschale fluidisch verbunden ist. Somit kann das mit teilweise geöffnetem Verschluss aus der gedrosselten Abflussöffnung herausfließende Fluid zunächst in die Auffangschale und anschließend durch die Ablauföffnung gezielt abfließen, bspw. in einen entsprechenden Auffangbehälter. Die Ablauföffnung kann bzgl. einer Drehachse des Verschlusses exzentrisch angeordnet sein. Die Ablaufschale kann bzgl. einer Drehachse des Verschlusses ringförmig ausgestaltet sein.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Es zeigen, jeweils schematisch,
- Fig. 1: einen Längsschnitt durch einen Kraftstofffilter,
- Fig. 2: einen Längsschnitt durch einen Einsatz für den Kraftstofffilter.

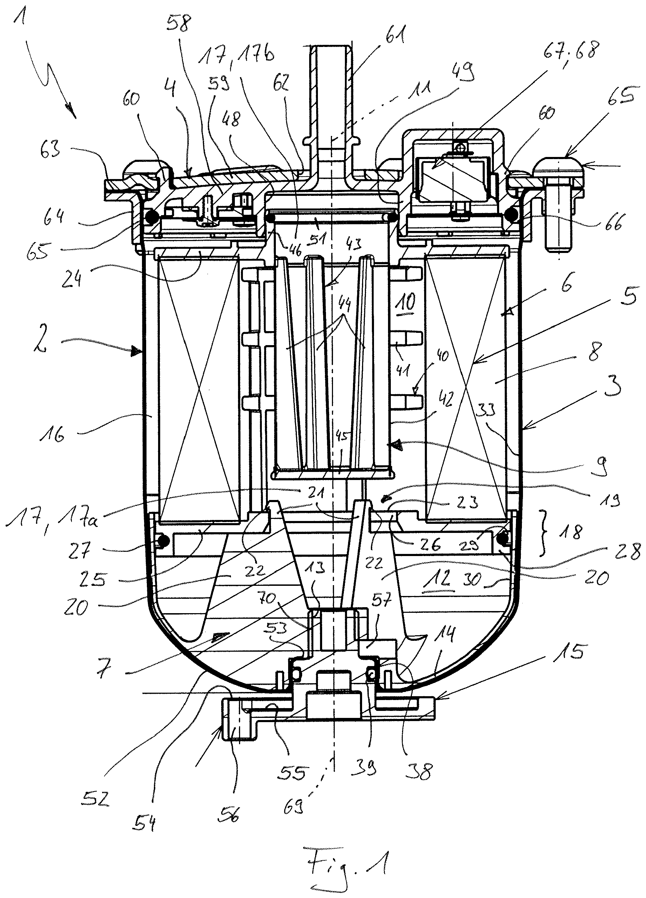

Entsprechend Fig. 1 umfasst ein Kraftstofffilter 1 einer Brennkraftmaschine, die insbesondere in einem Kraftfahrzeug angeordnet sein kann, ein Filtergehäuse 2, das einen Aufnahmebehälter 3 und einen Deckel 4 umfasst. Der Deckel 4 verschließt den Aufnahmebehälter 3.

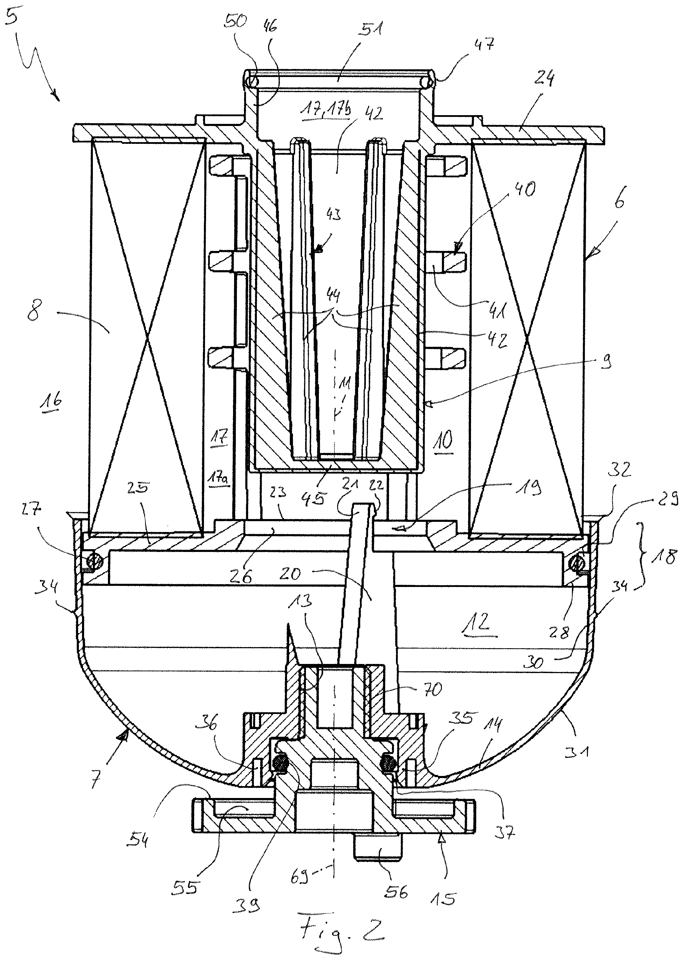

Ferner weist der Kraftstofffilter 1 gemäß den Fig. 1 und 2 einen Einsatz 5 auf, der ein Filterelement 6 und ein Topfelement 7 umfasst. Das Filterelement 6 weist einen ringförmigen Filterkörper 8 aus einem geeigneten Filtermaterial sowie einen Koalescer 9 auf. Der ringförmige Filterkörper 8 umschließt einen zylindrischen Innenraum 10 bzw. ein Inneres 10 des Filterelements 6. Der Koalescer 9 ist zylindrisch ausgestaltet und ist im Inneren 10 des Filterelements 6 bzw. des Filterkörpers 8 koaxial zum Filterkörper 8 angeordnet. Eine Längsmittelachse 11 des Filterelements 6 definiert dabei die Axialrichtung.

Das Topfelement 7 enthält einen Wassersammelraum 12 und eine Ablassöffnung 13, die in einem Boden 14 des Topfelements 7 ausgebildet ist. Die Ablassöffnung 13 ist dabei mit dem Wassersammelraum 12 fluidisch verbunden. Der Wassersammelraum 12 ist zum Inneren 10 des Filterkörpers 8 offen, sodass am Koalescer 9 abgeschiedenes Wasser in den Wassersammelraum 12 gelangt.

Der Kraftstofffilter 1 weist außerdem einen Verschluss 15 auf, mit dem die Ablassöffnung 13 des Topfelements 7 verschließbar ist.

Das Filterelement 6 trennt im Inneren des Kraftstofffilters 1 eine Rohseite 16 von einer Reinseite 17. Zweckmäßig ist der Kraftstofffilter 1 so konzipiert, dass sein Filterelement 6 radial von außen nach innen durchströmt ist, sodass das Innere 10 des Filterkörpers 8 reinseitig angeordnet ist. Ferner trennt nun der Koalescer 9 im Inneren 10 und somit reinseitig eine wasserhaltige Reinseite 17a von einer wasserfreien Reinseite 17b.

Im gezeigten Beispiel sind das Filterelement 6 und das Topfelement 7 separat hergestellte Bauteile, die im Bereich einer durch eine geschweifte Klammer angedeuteten Schnittstelle 18 aneinander befestigt sind. Zweckmäßig kann dies wie im gezeigten Beispiel mittels einer Clipsverbindung 19 realisiert werden. Grundsätzlich sind jedoch auch andere lösbare oder unlösbare Befestigungsmethoden denkbar. Insbesondere können Filterelement 6 und Topfelement 7 miteinander verschweißt sein. Im Bereich der Schnittstelle 18 besitzen somit sowohl das Filterelement 6 als auch das Topfelement 7 eine Schnittstelle 18, die es ermöglicht, die beiden Elemente 6,7 zum Einsatz 5 zusammenzubauen.

Die Clipsverbindung 19 besitzt hier mehrere axial verlaufende Stege 20, die vom Boden 14 des Topfelements 7 axial, in Richtung Filterelement 6 abstehen und an ihren freien Enden jeweils einen Rasthaken 21 mit Rastnase 22 aufweisen. Die Rasthaken 21 bzw. die Rastnasen 22 wirken dabei mit einer Rastkontur 23 zusammen, die an geeigneter Stelle am Filterelement 6 ausgebildet ist. Vorzugsweise besitzt das Filterelement 6 eine vom Topfelement 7 abgewandte erste Endscheibe 24 und eine dem Topfelement 7 zugewandte zweite Endscheibe 25. Die jeweilige Endscheibe 24,25 verschließt bzw. dichtet den Filterkörper 8 axial. Die zweite Endscheibe 25 ist zentral offen ausgestaltet, wobei ein radial innen liegender Öffnungsrad 26 der zweiten Endscheibe 25 die genannte Rastkontur 23 aufweist und mit den Rasthaken 21 verrastet.

Bei der hier gezeigten, gebauten Ausführungsform mit lösbarer Verbindung, nämlich mit der Clipsverbindung 19, ist radial zwischen dem Filterelement 6 und dem Topfelement 7 eine Dichtung 27 ausgebildet. Bspw. weist die zweite Endscheibe 25 an ihrem radial außen liegenden Rand einen axial abstehenden, ringförmig umlaufenden Kragen 28 auf, in den radial außen eine Ringnut 29 eingearbeitet ist, in welche die als O-Ring ausgestaltete Dichtung 27 eingesetzt ist. Die Dichtung 27 liegt radial außen an einer Innenseite 30 des Topfelements 7 an. Im Falle einer Schweißverbindung zwischen Filterelement 6 und Topfelement 7 kann diese Dichtung 27 entfallen.

Das Topfelement 7 ist zweckmäßig so gestaltet, dass es zur Übertragung von Druckkräften am Filterelement 6 axial abgestützt ist. Im gezeigten Beispiel wird besagte axiale Abstützung über die Stege 20 der Clipsverbindung 19 realisiert, die zu diesem Zweck vergleichsweise stabil ausgeführt sind. Hierdurch ist es mittels eines geeigneten Werkzeugs möglich, eine z. B. durch die Ablassöffnung 13 hindurch in das Topfelement 7 eingeleitete axiale Druckkraft auf das Filterelement 6 zu übertragen, um den gesamten Einsatz 5 bei geöffnetem Aufnahmebehälter 3 ausschieben zu können.

Das Topfelement 7 weist gemäß Fig. 2 an seiner Außenseite 31 zumindest eine integral ausgeformte Dichtkontur 32 auf, die geschlossen umlaufend konzipiert ist und die im Einbauzustand gemäß Fig. 1 an einer Innenseite 33 des Aufnahmebehälters 3 zur Anlage kommt. Im Beispiel der Fig. 2 ist die Dichtkontur 32 am oberen Ende des Topfelements 7 angeordnet. Unterhalb davon befindet sich an der Außenseite 31 ein Vorsprung 34. Hierbei kann es sich ebenfalls um eine geschlossen umlaufende, integral ausgeformte Dichtkontur handeln, die im Einbauzustand an der Innenseite 33 des Aufnahmebehälters 3 zur Anlage kommt.

Die Begriffe "oben" und "unten" beziehen sich auf den gezeigten vertikalen oder aufrechten Einbauzustand des Kraftstofffilters 1.

Alternativ kann es sich bei diesem Vorsprung 34 um einen von mehreren Vorsprüngen 34 handeln, die in der Umfangsrichtung verteilt angeordnet sind, die integral am Topfelement 7 ausgeformt sind und die im Einbauzustand jeweils an der Innenseite 33 des Aufnahmebehälters 3 zur Anlage kommen. Diese einzelnen Vorsprünge 34 dienen dabei nicht zur Abdichtung, sondern zur Lagefixierung bzw. Schwingungsdämpfung zwischen Topfelement 7 und Aufnahmebehälter 3.

Gemäß Fig. 2 kann das Topfelement 7 koaxial zur Ablassöffnung 13 einen Ringkragen 35 aufweisen, der im Beispiel dadurch ausgebildet ist, dass eine axial offene Ringnut 36 vorgesehen ist, deren radial innen liegende Wand den Ringkragen 35 bildet. Am Ringkragen 35 kann radial innen eine geschlossen umlaufende Dichtkontur 37 integral ausgeformt sein, die im montierten Zustand an der Innenseite 33 des Aufnahmebehälters 3 zur Anlage kommt. Hierzu besitzt der Aufnahmebehälter 3 für die Montage des Verschlusses 15 einen axial nach innen vorstehenden Ringkragen 38, an dem sich die genannte Dichtkontur 37 abstützt. Gegenüber dieser Dichtkontur 37 kann sich eine Dichtung 39 des Verschlusses 15 an besagtem Ringkragen 38 des Aufnahmebehälters 3 radial abstützen.

Das Filterelement 6 weist eine Innenzarge 40 auf, an der sich der Filterkörper 8 radial innen abstützen kann. Die Abmessungen von Innenzarge 40 und Koalescer 9 sind zweckmäßig so aufeinander abgestimmt, dass radial zwischen Koalescer 9 und Innenzarge 40 ein Ringraum 41 vorhanden ist. Die Innenzarge 40 ist im gezeigten Beispiel an der ersten Endscheibe 24 integral ausgeformt.

Der Koalescer 9 besitzt zweckmäßig einen zylindrischen Mantel 42 aus einer für Kraftstoff durchlässigen und für Wasser im Wesentlichen undurchlässigen Struktur oder Mantelstruktur. Diese Struktur kann bspw. als Siebstruktur ausgestaltet sein. Der Mantel 42 ist an einem ersten axialen Ende an der ersten Endscheibe 24 befestigt. Im Beispiel wird dies dadurch erreicht, dass eine Innenzarge 43 des Koalescers 9, an welcher der Mantel 42 radial innen abgestützt ist, integral an der ersten Endscheibe 24 ausgeformt ist. Im Beispiel ist die Innenzarge 43 des Koalescers 9 durch mehrere, in Umfangsrichtung verteilt angeordnete Streben 44 gebildet, die jeweils integral an der ersten Endscheibe 24 ausgeformt sind.

Der Koalescer 9 weist außerdem einen Boden 45 auf, der ein zweites axiales Ende des Mantels 42 verschließt. Im Beispiel ist der Boden 45 integral mit den Streben 44 und somit integral mit der Innenzarge 43 geformt.

Der Mantel 42 kann beim Spritzformen der ersten Endscheibe 24 in die Spritzform eingelegt sein, sodass er im Bereich der Innenzarge 43 zumindest partiell umspritzt wird, wodurch sich eine intensive Fixierung für den Mantel 42 ergibt.

Die erste Endscheibe 24 des Filterelements 6 ist hier ebenfalls offen ausgestaltet, wobei ein axial nach außen abstehender Ringkragen 46 die zentrale Öffnung der ersten Endscheibe 24 umschließt. Der Ringkragen 46, der von der ersten Endscheibe 24 nach außen absteht, weist radial außen eine integral ausgeformte, geschlossen umlaufende Dichtkontur 47 auf. Im montierten Zustand kommt diese Dichtkontur 47 gemäß Fig. 1 an einer Innenseite 48 eines Stutzens 49 radial zur Anlage, in den der Ringkragen 46 axial eingesteckt ist. Um die Dichtungswirkung dieser Dichtkontur 47 zu verbessern, kann der Ringkragen 46 radial innen eine umlaufende Ringnut 50 aufweisen, in die ein Federring 51 eingesetzt ist, die den Ringkragen 46 im Bereich der Dichtkontur 47 radial nach außen vorspannt. Der Federring 51 ist bspw. ein ringförmiger Federstahl mit einer Unterbrechung in Umfangsrichtung.

Gemäß Fig. 1 weist der Aufnahmebehälter 3 komplementär zur Ablassöffnung 13 des Topfelements 7 an einem Behälterboden 52 eine Durchtrittsöffnung 53 auf, die durch den zuvor genannten Ringkragen 38 eingefasst ist. Durch diese Durchtrittsöffnung 53 hindurch kann der Verschluss 15 am Topfelement 7 angebracht werden, um die Ablassöffnung 13 zu verschließen.

Der Verschluss 15 weist im gezeigten Beispiel an einer dem Aufnahmebehälter 3 bzw. dem Topfelement 7 zugewandten Oberseite 54 eine nach oben offene Auffangschale 55 auf, die sich im Beispiel ringförmig und koaxial zur Längsmittelachse 11 bzw. zur Drehachse 69 des aufgrund eines Gewindes 70 drehbaren bzw. geschraubten Verschlusses 15 erstreckt. Dabei ist am Verschluss 15 eine Ablauföffnung 56 ausgebildet, die mit der Auffangschale 55 fluidisch verbunden ist. Im Beispiel ist die Ablauföffnung 56 exzentrisch zur Drehachse 69 des Verschlusses 15 angeordnet. Beim Öffnen bzw. Aufschrauben des Verschlusses 15 kommt zunächst die Dichtung 39 des Verschlusses 15 vom Ringkragen 38 frei. Gleichzeitig führt ein Bypass 57, der einen Bestandteil der Ablassöffnung 13 bildet, dazu, dass Flüssigkeit, die im Wassersammelraum 12 angesammelt ist, entlang des Verschlusses 15 nach außen abfließen kann. Hierdurch gelangt die Flüssigkeit zunächst in die Auffangschale 55 und kann über die Ablassöffnung 56 abgeführt werden.

Der Deckel 4 ist im Beispiel mit einem Innendeckel 58 und einem Außendeckel 59 ausgestattet. Der Innendeckel 58 sorgt für eine Abdichtung des Aufnahmebehälters 3 und der Außendeckel 59 sorgt für eine Befestigung des Deckels 4 am Aufnahmebehälter 3. Insbesondere ist hier der Innendeckel 58 mit Hilfe des Außendeckels 59 am Aufnahmebehälter 3 befestigt. Ferner ist der Innendeckel 58 hier mit dem Außendeckel 59 verclipst. Entsprechende Rasten sind hierbei mit 60 bezeichnet.

Der Innendeckel 58 besitzt einen Auslassstutzen 61 für reinseitigen Kraftstoff und weist den zuvor genannten Stutzen 49 auf. Der Auslassstutzen 61 ist fluidisch mit der wasserfreien Reinseite 17b verbunden. Der Außendeckel 59 enthält eine Durchgangsöffnung 62, durch welche der Auslassstutzen 61 nach außen hindurchgeführt ist. Insbesondere sind Auslassstutzen 61 und Durchgangsöffnung 62 koaxial zur Längsmittelachse 11 des Filterelements 6 angeordnet.

Im Beispiel ist der Außendeckel 59 durch einen radial nach außen abgewinkelten Flansch 63 des Aufnahmebehälters 3 hindurch mit einem Haltering 64 verschraubt, wobei durch die Verschraubung 65 der Flansch 63 des Aufnahmebehälters 3 axial verspannt wird.

Der Innendeckel 58 ist radial außen mittels einer Dichtung 65, die in eine entsprechende Aufnahmenut 60 von außen eingelegt ist, radial am Aufnahmebehälter 3 abgedichtet.

Der Deckel 4 kann ferner mit einer Heizung 67 und/oder mit einem Druckregelventil 68 ausgestattet sein. Im Beispiel ist die Heizung 67 bzw. das Druckregelventil 68 an einer dem Filterelement 6 zugewandten Innenseite des Innendeckels 58 angeordnet.

## Patentansprüche

1. Kraftstofffilter (1) für eine Brennkraftmaschine, insbesondere eines Kraftfahrzeugs,
- mit einem Filtergehäuse (2) und mit einem Einsatz (5), der in einen Aufnahmebehälter (3) des Filtergehäuses (2) eingesetzt ist,
- wobei der Einsatz (5) ein Filterelement (6) aufweist, das einen ringförmigen Filterkörper (8) und einen koaxial dazu im Inneren (10) des Filterkörpers (8) angeordneten zylindrischen Koalescer (9) aufweist,
- wobei der Einsatz (5) ein Topfelement (7) aufweist, das einen Wassersammelraum (12) enthält, der zum Inneren (10) des Filterkörpers (8) offen ist,
- wobei das Filterelement (6) und das Topfelement (7) separat hergestellte Bauteile sind,
- wobei das Filterelement (6) und das Topfelement (7) aneinander befestigt sind, so dass der Einsatz (5) einheitlich in einen Aufnahmebehälter (3) eines Filtergehäuses (2) des Kraftstofffilters (1) einsetzbar ist,
**dadurch gekennzeichnet,**
- **dass** das Topfelement (7) in einem Boden (14) eine Ablassöffnung (13) enthält, die mit einem Verschluss (15) verschließbar ist und die mit dem Wassersammelraum (12) fluidisch verbunden ist,
- **dass** der Verschluss (15) in ein Gewinde (70) des Topfelements (7) eingeschraubt ist,
- **dass** das Topfelement (7) koaxial zur Ablassöffnung (13) einen Ringkragen (35) aufweist, an dem radial innen eine geschlossen umlaufende Dichtkontur (37) integral ausgeformt ist, die an einer Innenseite (33) des Filtergehäuses (2) radial anliegt,
- **dass** der Aufnahmebehälter (3) einen axial nach innen vorstehenden Ringkragen (38) aufweist, an dem sich die Dichtkontur (37) radial außen abstützt,
- **dass** der Verschluss (15) eine Dichtung (39) aufweist, die sich gegenüber der Dichtkontur (37) radial innen an dem Ringkragen (38) abstützt.

2. Kraftstofffilter nach Anspruch 1,
**dadurch gekennzeichnet,**
**dass** das Filterelement (6) und das Topfelement (7) mittels einer Clipsverbindung (19) aneinander befestigt sind.

3. Kraftstofffilter nach Anspruch 1 oder 2,
**dadurch gekennzeichnet,**
**dass** das Topfelement (7) zur Übertragung von Druckkräften am Filterelement (6) axial abgestützt ist.

4. Kraftstofffilter nach einem der Ansprüche 1 bis 3,
**dadurch gekennzeichnet,**
**dass** das Topfelement (7) an seiner Außenseite (31) zumindest eine integral ausgeformte, geschlossen umlaufende Dichtkontur (32,34) aufweist, die an einer Innenseite (33) eines Filtergehäuses (2) des Kraftstofffilters (1) radial anliegt, wenn der Einsatz (5) oder zumindest das Topfelement (7) in das Filtergehäuse (2) eingesetzt ist.

5. Kraftstofffilter nach einem der Ansprüche 1 bis 4,
**dadurch gekennzeichnet,**
**dass** das Topfelement (7) an seiner Außenseite (31) mehrere, in Umfangsrichtung verteilt angeordnete, nach außen abstehende, integral ausgeformte Vorsprünge (34) aufweist, die an einer Innenseite (33) eines Filtergehäuses (2) des Kraftstofffilters (1) radial anliegen, wenn der Einsatz (5) oder zumindest das Topfelement (7) in das Filtergehäuse (2) eingesetzt ist.

6. Kraftstofffilter nach einem der Ansprüche 1 bis 5,
**dadurch gekennzeichnet,**
**dass** das Filterelement (6) eine Innenzarge (40) aufweist, an der sich der Filterkörper (8) radial innen abstützt, wobei radial zwischen Koalescer (9) und Innenzarge (40) ein Ringraum (41) vorhanden ist, wobei insbesondere vorgesehen sein kann, dass die Innenzarge (40) integral an einer Endscheibe (24) des Filterelements (6) ausgeformt ist.

7. Kraftstofffilter nach einem der Ansprüche 1 bis 6,
**dadurch gekennzeichnet,**
**dass** der Koalescer (9) einen zylindrischen Mantel (42) aus einer für Kraftstoff durchlässigen Struktur aufweist, der an einem ersten axialen Ende an einer ersten Endscheibe (24) des Filterelements (6) befestigt ist.

8. Kraftstofffilter nach Anspruch 7,
**dadurch gekennzeichnet,**
**dass** der Koalescer (9) einen Boden (45) aufweist, der den Mantel (42) an einem zweiten axialen Ende verschließt.

9. Kraftstofffilter nach Anspruch 7 oder 8,
dadruch gekennzeichnet,
dass der Koalescer (9) eine Innenzarge (43) aufweist, an der sich der Mantel (42) radial innen abstützt, wobei insbesondere vorgesehen sein kann, dass die Innenzarge (43) durch mehrere Streben (44) gebildet ist, die den Boden (45) mit der ersten Endscheibe (24) verbinden.

10. Kraftstofffilter nach einem der Ansprüche 1 bis 8, **dadurch gekennzeichnet,**
**dass** das Filterelement (6) eine (erste) Endscheibe (24) aufweist, die zentral offen ist und einen axial abstehenden Ringkragen (46) aufweist, der radial außen eine integral ausgeformte, geschlossen umlaufende Dichtkontur (47) aufweist, die an einer Innenseite (48) eines Stutzens (49) eines Filtergehäuses (2) des Kraftstofffilters (1) radial anliegt, wenn der Einsatz (5) im Filtergehäuse (2) angeordnet und der Ringkragen (46) in den Stutzen (49) axial eingesteckt ist.

11. Kraftstofffilter nach Anspruch 10,
**dadurch gekennzeichnet,**
**dass** der Ringkragen (46) radial innen eine umlaufende Ringnut (50) aufweist, in der ein Federring (51) angeordnet ist, der den Ringkragen (46) im Bereich der Dichtkontur (47) radial nach außen vorspannt.

12. Kraftstofffilter nach einem der vorhergehenden Ansprüche,
**dadurch gekennzeichnet,**
**dass** der Aufnahmebehälter (3) an einem Behälterboden (52) eine Durchtrittsöffnung (53) aufweist, durch die hindurch der Verschluss (15) zum Verschließen der Ablassöffnung (13) von außen anbringbar ist.

13. Kraftstofffilter nach einem der vorhergehenden Ansprüche,
**dadurch gekennzeichnet,**
**dass** das Filtergehäuse (2) einen Deckel (4) zum Verschließen des Aufnahmebehälters (3) zur Aufnahme des Einsatzes (5) aufweist, der einen Innendeckel (58) und einen Außendeckel (59) aufweist, wobei der Innendeckel (58) gegenüber dem Aufnahmebehälter (3) abgedichtet ist und der Außendeckel (59) am Aufnahmebehälter (3) befestigt ist.

## Claims

1. Fuel filter (1) for an internal combustion engine, in particular of a motor vehicle,
- with a filter housing (2) and with an insert (5), which is inserted into an accommodating container (3) of the filter housing (2),
- wherein the insert (5) has a filter element (6), which has an annular filter body (8) and a cylindrical coalescer (9) arranged coaxially thereto in the interior (10) of the filter body (8),
- wherein the insert (5) has a cup element (7) which contains a water collecting chamber (12) which is open to the interior (10) of the filter body (8),
- wherein the filter element (6) and the cup element (7) are separately manufactured components,
- wherein the filter element (6) and the cup element (7) are fastened to each other, so that the insert (5) can be inserted as a unit into an accommodating container (3) of a filter housing (2) of the fuel filter (1),
**characterised in that**
- the cup element (7), in a base (14), contains an outlet opening (13) which can be closed by a closure (15) and which is fluidically connected to the water collecting chamber (12),
- the closure (15) is screwed into a thread (70) of the cup element (7),
- the cup element (7) has, coaxially to the outlet opening (13), an annular collar (35), on which, radially on the inside, there is an integrally moulded, continuous circumferential sealing contour (37) lying radially against an inside (33) of the filter housing (2),
- the accommodating container (3) has an annular collar (38) projecting axially inwards, on which the sealing contour (37) is supported radially on the outside,
- the closure (15) has a seal (39), which is supported radially on the inside on the annular collar (38) with respect to the sealing contour (37).

2. Fuel filter according to claim 1,
**characterised in**
**that** the filter element (6) and the cup element (7) are fastened to each other by means of a clip connection (19).

3. Fuel filter according to claim 1 or 2,
**characterised in**
**that** the cup element (7) is supported axially on the filter element (6), to transmit compressive forces.

4. Fuel filter according to any one of claims 1 to 3,
**characterised in**
**that** the cup element (7) has on its outside (31) at least one integrally moulded, continuous circumferential sealing contour (32, 34) lying radially against an inside (33) of a filter housing (2) of the fuel filter (1), when the insert (5) or at least the cup element (7) is inserted into the filter housing (2).

5. Fuel filter according to any one of claims 1 to 4,
**characterised in**
**that** the cup element (7) has on its outside (31) a plurality of outward-jutting, integrally moulded, circumferentially distributed protrusions (34) lying radially against an inside (33) of a filter housing (2) of the fuel filter (1), when the insert (5) or at least the cup element (7) is inserted into the filter housing (2).

6. Fuel filter according to any one of claims 1 to 5,
**characterised in**
**that** the filter element (6) has an inner frame (40), on which the filter body (8) is supported radially on the inside, wherein an annular space (41) is present radially between coalescer (9) and inner frame (40), wherein in particular it can be provided that the inner frame (40) is integrally moulded on an end disc (24) of the filter element (6).

7. Fuel filter according to any one of claims 1 to 6,
**characterised in**
**that** the coalescer (9) has a cylindrical casing (42), of a structure that is permeable for fuel, which is fastened on a first axial end on a first end disc (24) of the filter element (6).

8. Fuel filter according to claim 7,
**characterised in**
**that** the coalescer (9) has a base (45), which closes the casing (42) on a second axial end.

9. Fuel filter according to claim 7 or 8,
**characterised in**
**that** the coalescer (9) has an inner frame (43), on which the casing (42) is supported radially on the inside, wherein in particular it can be provided that the inner frame (43) is formed by a plurality of struts (44), which connect the base (45) with the first end disc (24).

10. Fuel filter according to any one of claims 1 to 8,
**characterised in**
**that** the filter element (6) has a (first) end disc (24), which is open in the centre and has an axially jutting annular collar (46), which has radially on the outside an integrally moulded, continuous circumferential sealing contour (47), which lies radially against an inside (48) of a stub (49) of a filter housing (2) of the fuel filter (1), when the insert (5) is arranged in the filter housing (2) and the annular collar (46) is pushed axially into the stub (49).

11. Fuel filter according to claim 10,
**characterised in**
**that** the annular collar (46) has radially on the inside a circumferential annular groove (50), in which a helical spring washer (51) is arranged, which pretensions the annular collar (46) radially outwards in the region of the sealing contour (47).

12. Fuel filter according to any one of the preceding claims,
**characterised in**
**that** the accommodating container (3) has on a container base (52) an opening (53), through which the closure (15) for closing the outlet opening (13) can be put in place from outside.

13. Fuel filter according to any one of the preceding claims,
**characterised in**
**that** the filter housing (2) has a cover (4) for closing the accommodating container (3) for accommodating the insert (5), which has an inner cover (58) and an outer cover (59), wherein the inner cover (58) is sealed in relation to the accommodating container (3) and the outer cover (59) is fastened on the accommodating container (3).

## Revendications

1. Filtre à carburant (1) pour un moteur à combustion interne, en particulier d'un véhicule automobile,
- avec un boîtier de filtre (2) et avec un élément à insérer (5) qui est inséré dans un logement (3) du boîtier de filtre (2),
- dans lequel l'élément à insérer (5) comporte un élément formant filtre (6) qui comporte un corps de filtre (8) en forme d'anneau et un coalesceur (9) cylindrique agencé à l'intérieur (10) du corps de filtre (8) de manière coaxiale à celui-ci,
- dans lequel l'élément à insérer (5) comporte un élément formant pot (7) qui contient un espace collecteur d'eau (12) qui est ouvert vers l'intérieur (10) du corps de filtre (8),
- dans lequel l'élément formant filtre (6) et l'élément formant pot (7) sont des pièces fabriquées séparément,
- dans lequel l'élément formant filtre (6) et l'élément formant pot (7) sont fixés l'un à l'autre de telle sorte que l'élément à insérer (5) peut être placé d'un seul tenant dans un logement (3) d'un boîtier de filtre (2) du filtre à carburant (1),
**caractérisé en ce que**
- l'élément formant pot (7) contient dans un fond (14) un orifice d'évacuation (13) qui peut être fermé avec un bouchon (15) et qui est relié pour le fluide à l'espace collecteur d'eau (12),
- le bouchon (15) est vissé dans un filetage (70) de l'élément formant pot (7),
- l'élément formant pot (7) comporte de manière coaxiale à l'orifice d'évacuation (13) un collet annulaire (35) au niveau duquel un contour d'étanchéité (37) circulaire fermé est formé de manière intégrée de façon radiale à l'intérieur et s'appuie de façon radiale contre un côté intérieur (33) du boîtier de filtre (2),
- le logement (3) comporte un collet annulaire (38) qui dépasse de façon axiale vers l'intérieur et au niveau duquel le contour d'étanchéité (37) s'appuie de façon radiale à l'extérieur,
- le bouchon (15) comporte un joint d'étanchéité (39) qui s'appuie de façon radiale à l'intérieur, par rapport au contour d'étanchéité (37), contre le collet annulaire (38).

2. Filtre à carburant selon la revendication 1,
**caractérisé en ce**
**que** l'élément formant filtre (6) et l'élément formant pot (7) sont fixés l'un à l'autre au moyen d'un assemblage clipsé (19).

3. Filtre à carburant selon la revendication 1 ou 2,
**caractérisé en ce**
**que** l'élément formant pot (7) s'appuie de façon axiale contre l'élément formant filtre (6) afin de transmettre des forces de pression.

4. Filtre à carburant selon l'une quelconque des revendications 1 à 3,
**caractérisé en ce**
**que** l'élément formant pot (7) comporte au niveau de son côté extérieur (31) au moins un contour d'étanchéité (32, 34) circulaire fermé qui est formé de manière intégrée et qui s'appuie de façon radiale contre un côté intérieur (33) d'un boîtier de filtre (2) du filtre à carburant (1) lorsque l'élément à insérer (5) ou au moins l'élément formant pot (7) est placé dans le boîtier de filtre (2).

5. Filtre à carburant selon l'une quelconque des revendications 1 à 4,
**caractérisé en ce**
**que** l'élément formant pot (7) comporte au niveau de son côté extérieur (31) plusieurs parties en saillie (34) formées de manière intégrée, dépassant vers l'extérieur, agencées de manière répartie en direction circonférentielle, qui s'appuient de façon radiale contre un côté intérieur (33) d'un boîtier de filtre (2) du filtre à carburant (1) lorsque l'élément à insérer (5) ou au moins l'élément formant pot (7) est placé dans le boîtier de filtre (2).

6. Filtre à carburant selon l'une quelconque des revendications 1 à 5,
**caractérisé en ce**
**que** l'élément formant filtre (6) comporte une structure intérieure (40) contre laquelle le corps de filtre (8) s'appuie de façon radiale à l'intérieur, dans lequel un espace annulaire (41) existe de façon radiale entre le coalesceur (9) et la structure intérieure (40) et dans lequel il peut en particulier être prévu que la structure intérieure (40) soit formée de manière intégrée au niveau d'un disque d'extrémité (24) de l'élément formant filtre (6).

7. Filtre à carburant selon l'une quelconque des revendications 1 à 6,
**caractérisé en ce**
**que** le coalesceur (9) comporte une enveloppe cylindrique (42) composée d'une structure laissant passer le carburant, laquelle enveloppe est fixée au niveau d'une première extrémité axiale à un premier disque d'extrémité (24) de l'élément formant filtre (6).

8. Filtre à carburant selon la revendication 7,
**caractérisé en ce**
**que** le coalesceur (9) comporte un fond (45) qui ferme l'enveloppe (42) au niveau d'une deuxième extrémité axiale.

9. Filtre à carburant selon la revendication 7 ou 8,
**caractérisé en ce**
**que** le coalesceur (9) comporte une structure intérieure (43) contre laquelle l'enveloppe (42) s'appuie de façon radiale à l'intérieur, dans lequel il peut en particulier être prévu que la structure intérieure (43) soit formée par plusieurs traverses (44) qui relient le fond (45) au premier disque d'extrémité (24).

10. Filtre à carburant selon l'une quelconque des revendications 1 à 8,
**caractérisé en ce**
**que** l'élément formant filtre (6) comporte un (premier) disque d'extrémité (24) qui est ouvert au centre et qui comporte un collet annulaire (46) dépassant de façon axiale et comportant de façon radiale à l'extérieur un contour d'étanchéité (47) circulaire, fermé, formé de manière intégrée, qui s'appuie de façon radiale contre un côté intérieur (48) d'un embout (49) d'un boîtier de filtre (2) du filtre à carburant (1) lorsque l'élément à insérer (5) est disposé dans le boîtier de filtre (2) et le collet annulaire (46) est enfoncé de façon axiale dans l'embout (49).

11. Filtre à carburant selon la revendication 10,
**caractérisé en ce**
**que** le collet annulaire (46) comporte de façon radiale à l'intérieur une rainure annulaire (50) circulaire dans laquelle est disposé un anneau de ressort (51) qui précontraint de façon radiale vers l'extérieur le collet annulaire (46) dans la zone du contour d'étanchéité (47).

12. Filtre à carburant selon l'une quelconque des revendications précédentes,
**caractérisé en ce**
**que** le logement (3) comporte au niveau d'un fond de logement (52) un orifice de passage (53) à travers lequel le bouchon (15) destiné à fermer l'orifice d'évacuation (13) peut être amené de l'extérieur.

13. Filtre à carburant selon l'une quelconque des revendications précédentes,
**caractérisé en ce**
**que** le boîtier de filtre (2) comporte un couvercle (4) afin de fermer le logement (3) destiné à loger l'élément à insérer (5), lequel couvercle comporte un couvercle intérieur (58) et un couvercle extérieur (59), le couvercle intérieur (58) étant étanchéifié par rapport au logement (3) et le couvercle extérieur (59) étant fixé au logement (3).
